# EUROPEAN PATENT SPECIFICATION

(11) **EP 1 544 174 B1**
(45) Date of publication and mention of the grant of the patent: **01.12.2010**
(21) Application number: 04078330.0
(22) Date of filing: 08.12.2004
(51) Int. Cl.: G02B 6/02

(54) **Optical fibre and its preform and process for producing the preform**
Optische Faser und ihre Vorform und Verfahren zum Herstellen der Vorform
Fibre optique, préforme associée et procédé de fabrication de la préforme

(30) Priority: 15.12.2003 FR 0314754
(43) Date of publication of application: 22.06.2005
(73) Proprietor: Draka Comteq B.V., 1083 HJ Amsterdam (NL)
(72) Inventor: Decaux, Isabelle, 78711 Mantes la Ville (FR); Herchuelz, Virginie, 78570 Andresy (FR); Campion, Jean-Florent, 78700 Conflans St Honorine (FR)
(74) Representative: Valkonet, Rutger

(56) References cited:
- EP-A- 1 388 525
- US-A- 5 522 007
- US-A1- 2003 140 659

## Description

The invention relates to the field of optical fibres, optical-fibre preforms and processes for producing a final optical-fibre preform obtained by carrying out plasma built-up on a primary preform.

There are several families of processes for obtaining primary preforms. The following may be distinguished: technologies with a tube, of the CVD (chemical vapour deposition) type, consisting in depositing material on the inside of a tube, and tubeless technologies, of the VAD (vapour axial deposition) type, consisting in depositing material axially, or of the OVD (outside vapour deposition) type, consisting in depositing material on the outside of a mandrel. The invention does not relate to tube-based technologies for obtaining primary preforms with a tube, i.e. of the CVD type. The invention does relate to tubeless technologies for obtaining primary preforms, i.e. of the VAD or OVD type.

The non prepublished European patent application EP 1 388 525 relates to a method for manufacturing a preform including the steps of covering circumference of a rod at least the core and the inner clad layer with a tube containing at least a high viscosity clad layer, and unifying the rod and the tube by heating and contracting the tube or by heating glass grain while depositing the glass grain which forms the high viscosity clad layer, wherein a plasma flame is used at this heating.

According to US 2003/0140659 A1 a cladding tube is collapsed onto the core rod wherein the core rod is positioned in a coaxial arrangement within the cladding tube. The surfaces facing the annular gap between core rod and cladding tube are cleaned and dehydrated by exposure to a chlorine-containing atmosphere at a temperature of approx. 1,000 °C. Subsequently, the cladding tube is attached to the core rod in a melting process by heating the assembly to a temperature of 2,150 °C (furnace temperature) in an electric furnace. The annular gap is easy to close by progressive heating of the vertically arranged assembly. Once collapsed onto the core rod, the cladding tube forms a second cladding glass layer.

US patent 5,522,007 relates to a method of building up an optical fiber preform by using plasma deposition, the method comprising the steps of:
- depositing build-up silica on the primary preform to be built up by means of a plasma torch;
- injecting hydroxyl ions in a controlled manner into said build-up silica, substantially at the flame of the plasma torch as said primary preform is being built up; and
- using silica grains for consisting the build-up silica.

According to one prior art, primary preforms obtained by VAD or OVD are sleeved by means of a sleeve tube of very large thickness and large diameter in order to get the final optical-fibre preform from which the optical fibre is obtained by drawing the preform. The sleeving operation, using these very bulky sleeve tubes, is extremely expensive since the cost of these large sleeve tubes is itself very high. The technology for obtaining final preforms by plasma-facing primary preforms with natural or synthetic particles is well known in the case of primary preforms obtained by CVD. It is much less expensive that the sleeving technology, since the natural or synthetic particles are substantially less expensive than a thick sleeve tube.

To the knowledge of the Applicant, there exists no prior art for obtaining a final optical-fibre preform by built-up on a primary preform obtained by VAD or OVD with particles.

Such a final preform would doubtless make it possible to obtain an optical fibre exhibiting better attenuation, due to the use of a VAD or OVD process for obtaining the primary preform instead of a CVD process, while still maintaining an attractive manufacturing cost owing to the use of built-up with particles instead of sleeving with a thick sleeve tube in order to obtain the final preform from the primary preform.

However, this is not the case! If good attenuation for an optical fibre obtained by CVD corresponds to 0.195 dB/km, surprisingly the use of a plasma built-up of natural particles on primary preforms of the VAD or OVD type, far from leading to the attenuation of the optical fibres obtained, for example from 0.195 dB/km to 0.190 dB/km, would on the contrary increase them to 0.210 dB/km, i.e. an enormous degradation in attenuation. It has been found that the intrinsic presence of a tube between the primary preform and the particles built-up layer in the CVD case forms a physical barrier against impurities and prevents the impurities contained in the faced layer from diffusing into the primary preform, whereas the absence of this same tube in the VAD case or likewise the OVD case allows substantial diffusion of the impurities from the built-up layer into the primary preform.

Hence the notion of placing a sleeve tube of relatively small thickness between the primary preform, obtained by VAD or OVD, and the built-up layer of particles in order to block any migration of the impurities coming from the built-up layer with particles at the physical interface that exists between the outer surface of the sleeve tube and the inner surface of the built-up layer with particles, this interface being a preferential site for the retention of impurities coming from the particles built-up layer towards the primary preform which corresponds to the active core of the optical fibre after it has been drawn. The interface acts as a preferential site for impurity retention both at the stage of the final preform and at the stage of the optical fibre in which the said interface remains. The smaller the thickness of the sleeve tube, the more proportionally bulky the particles built-up layer, and the lower the manufacturing cost of the final preform and of the optical fibre.

However, because of the mechanical properties, the sleeve tube must maintain a minimum thickness below which there is a risk of it becoming too fragile. The fact of inserting, between the primary preform obtained by VAD or OVD and the particles built-up layer, a relatively thin sleeve tube makes it possible, as regards the optical fibres obtained subsequently, not only to maintain the good attenuation intrinsic to VAD and OVD processes but also the relatively low manufacturing cost intrinsic to the process of plasma built-up with particles. The process for manufacturing the preform includes an additional step - the insertion of a sleeve tube between the primary preform and the built-up with particles - but the extra cost associated with this additional step proves to be largely compensated for by the gain achieved by replacing the thick sleeve tube with particles during production of the final preform from the primary preform. The thin sleeve tube inserted between the primary preform obtained by VAD or OVD and the built-up layer of particles is chosen to be made of fairly pure silica, i.e. silica containing no impurities but possibly containing dopants - this is for example of the same type as the tubes used in the CVD deposition processes.

The invention relates, both in the case of VAD primary preform production processes and in the case of OVD primary preform production processes, to a process for obtaining the final preform from the primary preform, to a final preform obtained and to an optical fibre obtained by fibre-drawing the final preform.

The invention provides processes for producing a final optical-fibre preform as defined in claims 1 and 2.

The invention also provides a final optical-fibre preform as defined in claim 3.

The invention also provides a method for manufacturing an optical fibre preform as defined in claim 13.

The invention also provides the used of a pure silica sleeve tube as defined in claim 16.

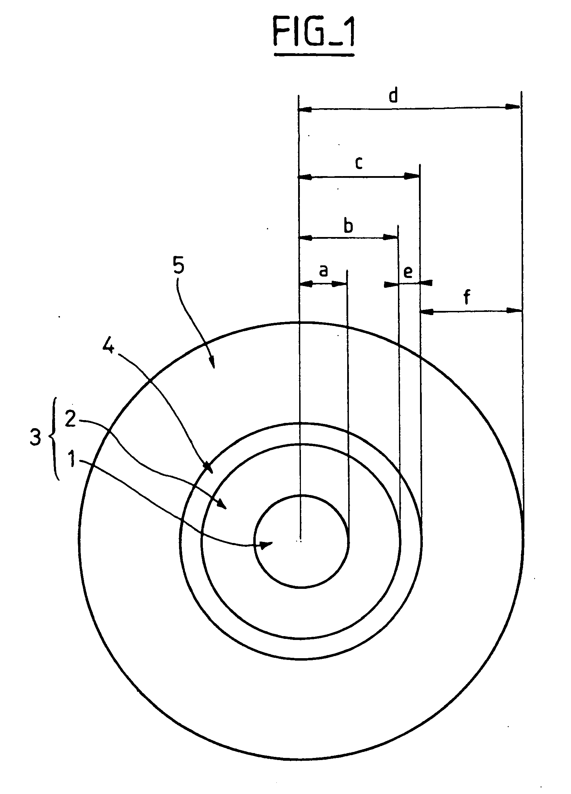

Figure 1 shows schematically a cross-sectional view of a final preform according to the invention.

At the centre is the optical core 1 of the final preform. The optical core 1 is obtained by VAD or OVD. The optical core 1 is surrounded by the optical cladding 2. The optical cladding 2 is obtained by VAD or OVD. The optical cladding 2 is in contact with the optical core 1. The optical core 1 and the optical cladding 2 together form the primary preform 3. The optical cladding 2 and the primary preform 3 are surrounded by and in contact with the thin sleeve tube 4. The sleeve tube 4 is of small thickness compared with the thick sleeve tube conventionally used for sleeving primary preforms obtained by VAD or OVD - its thickness is therefore smaller and preferably substantially smaller. The sleeve tube 4 is made of pure silica, i.e. silica containing no impurities. This pure silica may be doped or undoped and is preferably synthetic silica. The sleeve tube 4 is surrounded by and in contact with a built-up layer 5 made of silica particles. The built-up layer 5 may be homogeneous or consist of several built-up sublayers of different particles, depending on the type of optical fibre, and in particular of different quality, the lowest quality being outermost. The silica particles may be doped or undoped, depending on the desired type of optical-fibre profile. The silica particles may be natural or synthetic silica. Natural silica particles are less expensive but of lower quality than synthetic silica particles. However, for the type of final preform to which the invention relates, synthetic particles make the fibre-drawing more difficult - this is the reason why natural particles, i.e. quartz particles, are preferred. The optical core 1 has an outside radius a and an outside diameter 2a. The optical cladding 2 has an outside radius b and an outside diameter 2b. The primary preform 3 has an outside radius b and an outside diameter 2b. The sleeve tube 4 has an outside radius c and an outside diameter 2c. The built-up layer 5, consisting of a uniform layer or of a number of sublayers that differ from one another and may possibly consist of silica particles that differ from one another, has an outside radius d and an outside diameter 2d, with a thickness f. The sleeve tube 4 has a thickness e. The outside diameter of a primary preform is for example about 30 mm. The ratio of the outside diameter 2d of the built-uplayer 5, which is also the outside diameter 2d of the final preform, to the diameter 2a of the optical core 1 is for example about 14.

When the final preform drawing process is operated with a relatively high furnace temperature, the diffusion of impurities is facilitated, the process according to the invention is all the more advantageous as it prevents such diffusion of impurities. The temperature of the furnace will be higher when the gaseous fluid lying within the furnace has a lower thermal conductivity, which is the case for a 50% helium/50% argon mixture for example, as opposed to the use of helium alone, which is however more expensive. The invention is consequently particularly advantageous in low-cost processes in general.

To maintain good mechanical strength properties, the sleeve tube 4 preferably has a thickness e of at least 1.5 mm.

To reduce the manufacturing cost of the final preform and the manufacturing cost of the optical fibre obtained by drawing the final preform, the final preform has one or more of the following properties. Preferably, the outside diameter 2c of the sleeve tube 4 is at most one and a half times the outside diameter 2b of the primary preform 3. Preferably, the thickness e of the sleeve tube 4 is at most 3 mm. The built-up layer 5 has, for the same purpose, one and/or other of the following properties. Preferably, the outside diameter 2d of the built-up layer 5 is greater than 10 times the outside diameter 2a of the optical core 1. Preferably, the thickness f of the built-up layer 5 is at least equal to the outside diameter 2b of the primary preform 3.

To optimize the compromise between manufacturing cost and mechanical properties of the final preform, the final preform has one and/or other of the following properties. Preferably, the thickness e of the sleeve tube 4 is between 5% and 12% of the outside diameter 2b of the primary preform 3. Preferably, the outside diameter 2c of the sleeve tube 4 is between 4.5 times and 5.5 times the outside diameter 2a of the optical core 1.

The sleeve tube 4 of the final preform preferably forms a sufficient barrier to the diffusion of impurities from the built-up layer 5 into the primary preform 3 so that the attenuation of the said optical fibre obtained by fibre-drawing the said final preform is at most 0.200 dB/km, preferably at most 0.195 dB/km and advantageously at most 0.190 dB/km.

The optical fibres according to the invention, obtained by fibre-drawing the final preforms according to the invention, are preferably used in a low-cost communication system that may be a low-cost long-haul communication system, "long-haul" typically meaning distances ranging from a few hundred to a few thousand km, or else a low-cost metropolitan communication system, "metropolitan" meaning moderate distances, i.e. from a few km to a few tens of km.

## Claims

1. Process for producing a final optical-fibre preform, comprising in succession:
- a step of producing a primary preform (3) comprising an optical core (1) and an optical cladding (2) surrounding said core (1) obtained by a vapour axial deposition (VAD) or outside vapour deposition (OVD) process;
- a step of producing a sleeved primary preform obtained by sleeving the primary preform (3) using a pure silica sleeve tube (4); and
- a step of producing a final optical-fibre preform obtained by plasma built-up of the sleeved primary preform with silica particles, wherein the built-up layer (5) consists of a number of sublayers of different silica particles having different quality.

2. A process according to claim 1, **characterized in that** the lowest quality being outermost.

3. Final optical-fibre preform comprising:
- a primary preform (3) comprising an optical core (1) and an optical cladding (2) surrounding said core (1) obtained by a vapour axial deposition (VAD) or outside vapour deposition (OVD) process;
- a pure silica sleeve tube (4) surrounding the primary preform (3); and
- a plasma built-up layer (5) made from silica particles surrounding the pure silica sleeve tube (4), wherein the built-up layer (5) consists of a number of sublayers of different silica particles.

4. Preform according to Claim 3, **characterized in that** the outside diameter (2c) of the sleeve tube (4) is at most one and half times the outside diameter (2b) of the primary preform (3).

5. Preform according to Claim 4, **characterized in that** the thickness (e) of the sleeve tube (4) is between 5% and 12% of the outside diameter (2b) of the primary preform (3).

6. Preform according to any one of Claims 3 to 5, **characterized in that** the thickness (e) of the sleeve tube (4) is at least 1.5 mm.

7. Preform according to any one of Claims 3 to 6, **characterized in that** the thickness (a) of the sleeve tube (4) is at most

8. Preform according to any one of Claims 3 to 7, **characterized in that** the primary preform (3) has an optical core (1) and an optical cladding (2) and **in that** the outside diameter (2c) of the sleeve tube (4) is between 4.5 times and 5.5 times the outside diameter (2a) of the optical core (1).

9. Preform according to any one of Claims 3 to 8, **characterized in that** the primary preform (3) has an optical core (1) and an optical cladding (2) and **in that** the outside diameter (2d) of the built-up layer (5) is greater than 10 times the outside diameter (2a) of the optical core (1).

10. Preform according to any one of Claims 3 to 9, **characterized in that** the thickness (f) of the built-up layer (5) is at least equal to the outside diameter (2b) of the primary preform (3).

11. Preform according to any one of Claims 3 to 10, **characterized in that** the silica particles are natural silica particles.

12. Preform according to any one of Claims 3 to 11, **characterized in that** the silica particles are synthetic silica particles.

13. A method for manufacturing an optical fibre by fibre-drawing 9 a final preform according to any one of claims 3 to 12, **characterized in that** the attenuation of the said optical fibre obtained by fibre-drawing the said final preform is at most 0.200 dB/km.

14. A method according to claim 13, **characterized in that** the attenuation of the said optical fibre obtained by fibre-drawing the said final preform is at most 0.195 dB/km.

15. A method according to claim 14, **characterized in that** the attenuation of the said optical fibre obtained by fibre-drawing the said final preform is at most 0.190 dB/km.

16. The use of a pure silica sleeve tube (4) in a final optical-fibre preform comprising a primary preform (3) comprising an optical core (1) and an optical cladding (2) surrounding said core (1), a pure silica sleeve tube (4) and a built-up layer (5) made from silica particles surrounding said pure silica sleeve tube (4) for preventing impurities contained in said built-up layer (5) from diffusing into the primary preform (3).

## Patentansprüche

1. Verfahren zur Herstellung einer endgültigen Vorform für eine optische Faser, umfassend nacheinander:
- einen Schritt eines Herstellens einer Hauptvorform (3), welche einen optischen Kern (1) und einen den Kern (1) umgebenden optischen Mantel (2) umfasst und welche durch ein axiales Aufdampfverfahren (vapour axial deposition, VAD) oder ein Außenseitenaufdampfverfahren (outside vapour deposition, OVD) gewonnen wird;
- einen Schritt eines Herstellens einer eingehüllten Hauptvorform, welche durch Einhüllen der Hauptvorform (3) unter Verwendung eines Hülsenrohrs (4) aus reinem Siliziumdioxyd gewonnen wird; und
- einen Schritt eines Herstellens einer endgültigen Vorform für eine optische Faser, welche durch einen Plasmaaufbau auf der eingehüllten Hauptvorform mit Siliziumdioxydpartikeln gewonnen wird, wobei die aufgebaute Schicht (5) aus einer Anzahl von Teilschichten von unterschiedlichen Siliziumdioxydpartikeln mit unterschiedlicher Qualität besteht.

2. Verfahren nach Anspruch 1, **dadurch gekennzeichnet, dass** die geringste Qualität am weitesten Außen ist.

3. Endgültige Vorform für eine optische Faser, umfassend:
- eine Hauptvorform (3), welche einen optischen Kern (1) und einen den Kern (1) umgebenden optischen Mantel (2) umfasst und welche durch ein axiales Aufdampfverfahren (vapour axial deposition, VAD) oder ein Außenseitenaufdampfverfahren (outside vapour deposition, OVD) gewonnen wird;
- ein Hülsenrohr (4) aus reinem Siliziumdioxyd, welches die Hauptvorform (3) umgibt; und
- eine plasmaaufgebaute Schicht (5), welche aus Siliziumdioxydpartikeln gefertigt ist, welche das Hülsenrohr (4) aus reinem Siliziumdioxyd umgeben, wobei die aufgebaute Schicht (5) aus einer Anzahl von Teilschichten von unterschiedlichen Siliziumdioxydpartikeln besteht.

4. Vorform nach Anspruch 3, **dadurch gekennzeichnet, dass** der Außendurchmesser (2c) des Hülsenrohrs (4) höchstens anderthalbmal so groß wie der Außendurchmesser (2b) der Hauptvorform (3) ist.

5. Vorform nach Anspruch 4, **dadurch gekennzeichnet, dass** die Dicke (e) des Hülsenrohrs (4) zwischen 5% und 12% des Außendurchmessers (2b) der Hauptvorform (3) beträgt.

6. Vorform nach einem der Ansprüche 3 bis 5 **dadurch gekennzeichnet, dass** die Dicke (e) des Hülsenrohrs (4) mindestens 1,5 mm beträgt.

7. Vorform nach einem der Ansprüche 3 bis 6, **dadurch gekennzeichnet, dass** die Dicke (e) des Hülsenrohrs (4) höchstens 3 mm beträgt.

8. Vorform nach einem der Ansprüche 3 bis 7, **dadurch gekennzeichnet, dass** die Hauptvorform (3) einen optischen Kern (1) und einen optischen Mantel (2) aufweist, und dass der Außendurchmesser (2c) des Hülsenrohrs (4) zwischen 4,5-mal und 5,5-mal dem Außendurchmesser (2a) des optischen Kerns (1) liegt.

9. Vorform nach einem der Ansprüche 3 bis 8, **dadurch gekennzeichnet, dass** die Hauptvorform (3) einen optischen Kern (1) und einen optischen Mantel (2) aufweist, und dass der Auβendurchmesser (2d) der aufgebauten Schicht (5) größer als 10-mal der Außendurchmesser (2a) des optischen Kerns (1) ist.

10. Vorform nach einem der Ansprüche 3 bis 9, **dadurch gekennzeichnet, dass** die Dicke (f) der aufgebauten Schicht (5) zumindest gleich dem Außendurchmesser (2b) der Hauptvorform (3) ist.

11. Vorform nach einem der Ansprüche 3 bis 10, **dadurch gekennzeichnet, dass** die Siliziumdioxydpartikel natürliche Siliziumdioxydpartikel sind.

12. Vorform nach einem der Ansprüche 3 bis 11, **dadurch gekennzeichnet, dass** die Siliziumdioxydpartikel synthetische Siliziumdioxydpartikel sind.

13. Verfahren zur Herstellung einer optischen Faser durch Faserziehen einer endgültigen Vorform nach einem der Ansprüche 3 bis 12, **dadurch gekennzeichnet, dass** die Dämpfung der optischen Faser, welche durch Faserziehen de endgültigen Vorform gewonnen wird, höchstens 0,200 dB/km beträgt.

14. Verfahren nach Anspruch 13, **dadurch gekennzeichnet, dass** die Dämpfung der optischen Faser, welche durch Faserziehen der endgültigen Vorform gewonnen wird, höchstens 0,195 dB/km beträgt.

15. Verfahren nach Anspruch 14, **dadurch gekennzeichnet, dass** die Dämpfung der optischen Faser, welche durch Faserziehen der endgültigen Vorform gewonnen wird, höchstens 0,190 dB/km beträgt.

16. Verwendung eines Hülsenrohrs (4) aus reinem Siliziumdioxyd bei einer endgültigen Vorform einer optischen Faser, welche eine Hauptvorform (3) umfassend einen optischen Kern (1) und einen den Kern (1) umgebenden optischen Mantel (2), ein Hülsenrohr (4) aus reinem Siliziumdioxyd und eine aufgebaute Schicht (5), welche aus Siliziumdioxydpartikeln gefertigt ist, die das Hülsenrohr (4) aus reinem Siliziumdioxyd umgeben, umfasst, um zu verhindern, dass Verunreinigungen, welche in der aufgebauten Schicht (5) enthalten sind, in die Hauptvorform (3) diffundieren.

## Revendications

1. Procédé de production d'une préforme de fibre optique finale, comprenant successivement :
- une étape de production d'une préforme primaire (3), comprenant un coeur optique (1) et une gaine optique (2) entourant ledit coeur (1), obtenue par un procédé de dépôt axial en phase vapeur (VAD) ou de dépôt extérieur en phase vapeur (OVD) ;
- une étape de production d'une préforme primaire gainée obtenue en gainant la préforme primaire (3) au moyen d'un manchon tubulaire de silice pure (4) ; et
- une étape de production d'une préforme de fibre optique finale obtenue par empilage au plasma sur la préforme primaire gainée avec des particules de silice, dans lequel la couche empilée (5) est constituée d'un certain nombre de sous-couches de particules de silice différentes ayant des qualités différentes.

2. Procédé selon la revendication 1, **caractérisé en ce que** la qualité la moins bonne est la plus extérieure.

3. Préforme de fibre optique finale comprenant :
- une préforme primaire (3), comprenant un coeur optique (1) et une gaine optique (2) entourant ledit coeur (1), obtenue par un procédé de dépôt axial en phase vapeur (VAD) ou de dépôt extérieur en phase vapeur (OVD) ;
- un manchon tubulaire de silice pure (4) entourant la préforme primaire (3) ; et
- une couche empilée au plasma (5) faite de particules de silice entourant le manchon tubulaire de silice pure (4), dans lequel la couche empilée (5) est constituée d'un certain nombre de sous-couches de particules de silice différentes.

4. Préforme selon la revendication 3, **caractérisée en ce que** le diamètre extérieur (2c) du manchon tubulaire (4) est au plus d'une fois et demie le diamètre extérieur (2b) de la préforme primaire (3).

5. Préforme selon la revendication 4, **caractérisée en ce que** l'épaisseur (e) du manchon tubulaire (4) est comprise entre 5 % et 12 % du diamètre extérieur (2b) de la préforme primaire (3).

6. Préforme selon l'une quelconque des revendications 3 à 5, **caractérisée en ce que** l'épaisseur (e) du manchon tubulaire (4) est d'au moins 1,5 mm.

7. Préforme selon l'une quelconque des revendications 3 à 6, **caractérisée en ce que** l'épaisseur (e) du manchon tubulaire (4) est d'au plus 3 mm.

8. Préforme selon l'une quelconque des revendications 3 à 7, **caractérisée en ce que** la préforme primaire (3) a un coeur optique (1) et une gaine optique (2) et **en ce que** le diamètre extérieur (2c) du manchon tubulaire (4) est compris entre 4,5 fois et 5,5 fois le diamètre extérieur (2a) du coeur optique (1).

9. Préforme selon l'une quelconque des revendications 3 à 8, **caractérisée en ce que** la préforme primaire (3) a un coeur optique (1) et une gaine optique (2) et **en ce que** le diamètre extérieur (2d) de la couche empilée (5) est supérieur à 10 fois le diamètre extérieur (2a) du coeur optique (1).

10. Préforme selon l'une quelconque des revendications 3 à 9, **caractérisée en ce que** l'épaisseur (f) de la couche empilée (5) est au moins égale au diamètre extérieur (2b) de la préforme primaire (3).

11. Préforme selon l'une quelconque des revendications 3 à 10, **caractérisée en ce que** les particules de silice sont des particules de silice naturelles.

12. Préforme selon l'une quelconque des revendications 3 à 11, **caractérisée en ce que** les particules de silice sont des particules de silice synthétiques.

13. Procédé de fabrication d'une fibre optique par étirage en une fibre d'une préforme finale selon l'une quelconque des revendications 3 à 12, **caractérisé en ce que** l'atténuation de ladite fibre optique obtenue par étirage en une fibre de ladite préforme finale est d'au plus 0,200 dB/km.

14. Procédé selon la revendication 13, **caractérisé en ce que** l'atténuation de ladite fibre optique obtenue par étirage en une fibre de ladite préforme finale est d'au plus 0,195 dB/km.

15. Procédé selon la revendication 14, **caractérisé en ce que** l'atténuation de ladite fibre optique obtenue par étirage en une fibre de ladite préforme finale est d'au plus 0,190 dB/km.

16. Utilisation d'un manchon tubulaire de silice pure (4) dans une préforme de fibre optique finale comprenant une préforme primaire (3) comprenant un coeur optique (1) et une gaine optique (2) entourant ledit coeur (1), un manchon tubulaire de silice pure (4) et une couche empilée (5) faite de particules de silice entourant ledit manchon tubulaire de silice pure (4) pour empêcher les impuretés présentes dans ladite couche empilée (5) de diffuser à l'intérieur de la préforme primaire (3).
